Europäisches Patentamt

**European Patent Office**

**Office européen des brevets**

(11) Veröffentlichungsnummer: **0 126 277**
**B1**

(12) **EUROPÄISCHE PATENTSCHRIFT**

(45) Veröffentlichungstag der Patentschrift:
29.03.89

(51) Int. Cl.⁴: **B 29 C 47/02,** B 29 C 47/08,
B 29 C 47/70

(21) Anmeldenummer: **84104113.0**

(22) Anmeldetag: **12.04.84**

(54) **Verfahren und Vorrichtung zur Herstellung eines Fugendichtungsbandes aus Kunststoff mit vom Bandprofil umschlossenen Versteifungskörpern, sowie nach dem Verfahren hergestelltes Fugendichtungsband.**

(30) Priorität: **06.05.83 CH 2488/83**

(43) Veröffentlichungstag der Anmeldung:
**28.11.84 Patentblatt 84/48**

(45) Bekanntmachung des Hinweises auf die Patenterteilung:
**29.03.89 Patentblatt 89/13**

(84) Benannte Vertragsstaaten:
**AT DE FR IT**

(56) Entgegenhaltungen:
**DE-A-1 704 595**
**DE-A-1 921 788**
**DE-A-2 926 581**
**DE-C-841 782**
**US-A-3 488 808**
**US-A-4 272 472**

(73) Patentinhaber: **Berthoud, Marc L., Leisibüel, CH-8484 Weisslingen (CH)**

(72) Erfinder: **Der Erfinder hat auf seine Nennung verzichtet**

(74) Vertreter: **Patentanwälte Dr. Solf & Zapf, Schlossbleiche 20 Postfach 13 01 13, D-5600 Wuppertal 1 (DE)**

EP 0 126 277 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein Verfahren sowie eine Vorrichtung zur Herstellung eines Fugendichtungsbandes aus Kunststoff mit in Abständen quer zur Bandlänge angeordneten, vom Bandprofil umschlossenen Versteifungskörpern, wobei in einem formgebenden Werkzeug eines Extruders Extrusionsströme jeweils unter einem spitzen Winkel zur Extrusionsebene in einem Auftreffwinkelbereich zusammengeführt und anschließend zum Band vereinigt werden, und wobei die Versteifungskörper in der Extrusionsebene in das Band eingebettet werden. Die Erfindung betrifft ferner ein nach dem Verfahren hergestelltes Fugendichtungsband.

Es ist ein Verfahren zur Herstellung eines Fugendichtungsbandes der genannten Gattung bekannt, wobei die beiden Extrusionsströme getrennt aus dem Extruderkopf austreten und die Versteifungskörper taktweise von hinten in den Zusammenführungsbereich der beiden Teilströme eingeschoben und danach die bereits verfestigten Teilströme durch ein Vakuum zusammengeführt werden. Dabei sind die Versteifungskörper jeweils in einer örtlich verdickten Bandteillänge angeordnet, da die Teilströme mit unverändertem Profil die Versteifungskörper umschließen. (DE-OS-2 926 581).

Das bekannte Verfahren hat den Nachteil, daß infolge Zusammenführung der Teilströme außerhalb des Formgebungsbereiches des Extruderkopfs keine innige und dauerhafte Verschmelzung der Teilströme stattfindet. Es kann daher bei Belastung zum Auftrennen der Teilungsfuge kommen, und damit zum Verlust der Dichtwirkung.

Der vorliegenden Erfindung liegt die Aufgabe zugrunde, ausgehend vom genannten Stand der Technik, ein Verfahren sowie eine Vorrichtung zur Herstellung eines Fugendichtungsbandes mit in dessen Profil eingebetteten Versteifungskörpern anzugeben, welche die genannten Schwierigkeiten und technischen Grenzen überwinden. Insbesondere soll mit der Erfindung eine problemlose und wirtschaftliche Fertigung erzielt werden, wobei Versteifungskörper unterschiedlichen Profiles, auch solche mit stärkeren Profilen, problemlos in das Band eingearbeitet werden können, ohne daß hierdurch dessen Gefüge beeinträchtigt wird.

Die Lösung gelingt mit der Erfindung dadurch, daß bei einem Verfahren der eingangs genannten Gattung die Extrusionsströme unter Formgebung zum Band vereinigt werden, daß von innerhalb des formgebenden Werkzeuges her eine Zunge in Extrusionsrichtung durch den Auftreffwinkelbereich so weit zwischen die Extrusionsströme taktweise eingeschoben wird, daß sie unter Verdrängung einer einem Versteifungskörper in etwa entsprechenden Raumeinheit zwischen die Extrusionsströme bis außerhalb des Auftreffwinkelbereichs eindringt und danach unter Freigabe eines nach einer Seite hin offenen, schlitzförmigen Hohlraumes von dem Auftreffwinkelbereich zurückgezogen wird, und daß die Versteifungskörper in die so gebildeten Hohlräume eingeschoben werden.

Das erfindungsgemäße Verfahren hat den Vorteil, daß eine homogene Verschmelzung der beiden zusammengeführten Extrusionsströme stattfindet, wodurch eine Beschädigung durch Auftrennen in der Ebene der Vereinigung vermieden wird. Dadurch, daß die Hohlräume während der Formgebung des Bandes innerhalb des formgebenden Werkzeuges durch Einschieben der als Verdrängerkörper wirkenden Zunge in das extrudierte Band von innen her eingeformt werden, bleibt das Bandprofil unabhängig von der Querschnittsform der Versteifungskörper in Längsrichtung unverändert. Der Fertigungsvorgang ist unkompliziert und ermöglicht eine zuverlässige Verschmelzung der Extrusionsströme, gegebenenfalls bei Herstellung unterschiedlich großer Hohlräume für entsprechend profilierte Versteifungskörper.

Dabei sieht eine Ausgestaltung vor, daß die Hohlräume die Form einseitig offener schmaler Taschen aufweisen, deren Länge geringfügig kürzer als die Breite des Bandes ist.

Um zu verhindern, daß die Schlitze nach Herausziehen der Zunge infolge der Plastizität des Kunststoffes oder durch den Formgebungsdruck der Extrusionsströme zusammenkleben, ist vorgesehen, daß in die Hohlräume während und/oder unmittelbar nach ihrer Herstellung ein Trenn- und/oder Kühlmedium unter Druck eingeführt wird.

Dabei kann hierfür Luft oder Luft/Wasser-Gemisch oder Luft mit Anteilen eines Anti-Klebemittels verwendet werden.

Das Verfahren sieht weiter vor, daß die Versteifungskörper in das Band nach dessen Austritt aus dem formgebenden Werkzeug in die einseitig offenen Schlitze von der Seite her eingeschoben werden und anschließend die Schlitzöffnung verschweißt wird. Eine sehr vorteilhafte Querstabilität des Bandes ergibt sich dadurch, daß als Versteifungskörper Metallstäbe mit rundem, elliptischem oder ellipsoidischem Profil verwendet werden, die auf fertige Längen geschnitten und mit vorzugsweise verrundeten Stirnkanten ausgebildet sind, deren Breite zwischen 5 und 8 mm, vorzugsweise ca. 6 mm, Dicke zwischen 1,5 und 3 mm, vorzugsweise ca 2 mm beträgt, und deren Länge einige mm kürzer als die Breite des Bandes ist.

Eine erfindungsgemäße Vorrichtung zur Herstellung eines Fugendichtungsbandes aus extrudiertem Kunststoff, insbesondere nach dem Verfahren der Ansprüche 1 bis 6, umfassend einen Extruder mit einem formgebenden Werkzeug, welches mit zwei einen Verdrängerkörper zwischen sich einschließenden Hälften Strömungskanäle oberhalb und unterhalb des Verdrängerkörpers bildet, die spitzwinklig zur Längsteilungsebene zusammenlaufen und im Auftreffwinkelbereich einen das Profil des Bandes bestimmenden Schlitzkanal bilden, ist dadurch gekennzeichnet, daß der Verdrängerkörper eine im Auftreffwinkelbereich mündende Führung aufweist, welche eine in Extrusionsrichtung verschiebbare, an einem Schieber befestigte Zunge aufnimmt, und daß der Schieber mit einem taktweise Arbeitshübe ausführenden Antrieb verbunden ist. Hierbei ist der Arbeitshub derart, daß er mindestens um die Breite des zu bildenden Hohlraums außerhalb des Mundstücks liegt.

Mit Vorteil ist weiter vorgesehen, daß hinter dem Auftreffwinkelbereich von der Seite her eine Blasdüse einmündet, welche an eine Zuführung für das Trennmedium angeschlossen ist.

Weiter ist vorgesehen, daß in Extrusionsrichtung außerhalb des Werkzeuges seitlich eine Einschubstation mit Magazin und Schieber zum Einführen der Versteifungskörper, sowie in Extrusionsrichtung folgend eine Schweiß-Station angeordnet ist.

Weitere zweckmäßige Ausgestaltungen der Vorrichtung sind entsprechend den Merkmalen der Ansprüche 10 bis 16 vorgesehen.

Ein nach dem erfindungsgemäßen Verfahren hergestelltes Fugendichtungsband ist dadurch gekennzeichnet, daß es bei unverändertem Profil im Verlauf seiner Längserstreckung quer dazu verlaufende schlitzförmige Ausnehmungen im Inneren im Bereich seiner Extrusionsebene aufweist, in welche Versteifungskörper von rundem, elliptischem oder ellipsoidischem Profil eingelegt sind, und welche an der Bandkante durch Schweißung hermetisch verschlossen sind.

Im folgenden wird die Erfindung mit ihren Vorteilen anhand eines Ausführungsbeispieles in der beiliegenden Zeichnung näher erläutert. Es zeigen:

Fig. 1    eine erfindungsgemäße Vorrichtung im Schnitt gemäß Schnittebene I - I in Fig. 3;
Fig. 2    eine Draufsicht auf die Vorrichtung
und 2a    gemäß Fig. 1 mit zum Teil geschnittenen Funktionselementen in jeweils alternativer Ausführungsform,
Fig. 3    die gleiche Vorrichtung im Schnitt gemäß Schnittebene III - III in Fig. 1.

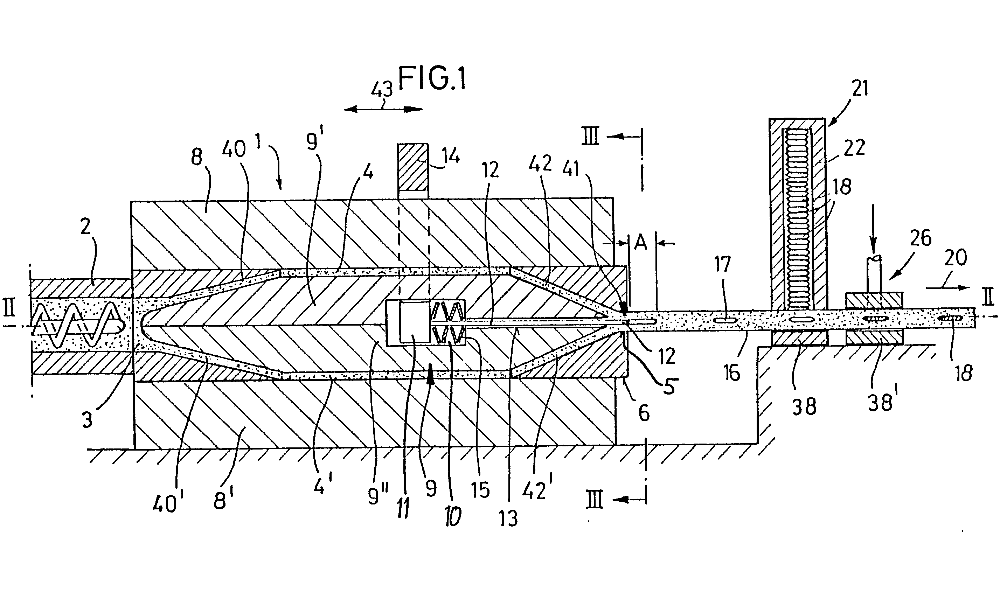

Die Vorrichtung in Fig. 1 zeigt ein formgebendes Werkzeug in Form eines Extruderkopfes 1, dessen Extrusionskanal 3 an den Extruder 2 angeschlossen ist. Der Extruderkopf 1 besteht aus zwei in der Extrusionsebene II - II längsgeteilten Hälften 8, 8', die einen Verdrängerkörper 9 zwischen sich einschließen und mit diesem die Strömungskanäle 4, 4' bilden. Diese verbreitern sich, ausgehend vom Extrusionskanal 3 in zunächst aufwärts und abwärts gerichteten Strömungswegen 40, 40' zur Bandbreite. Anschließend umströmen sie annähernd parallel zur Extrusionsebene II - II den Verdrängerkörper 9 und vereinigen sich, in aufwärts und abwärts gegeneinander sowie im spitzen Winkel zur Extrusionsebene gerichteten Strömungswegen 42, 42' im Auftreffwinkelbereich 41. Von dort verläuft der Schlitzkanal 5 im Mundstück 6 des formgebenden Extrusions-Werkzeuges. Der Verdrängerkörper 9 ist in der Extrusionsebene II - II in zwei Hälften 9' und 9'' längsgeteilt. Diese bilden zwischen sich einen quer zur Extrusionsrichtung verlaufenden Durchbruch 10 zur Aufnahme des Schiebers 11, an welchem die Zunge 12 angeordnet ist, die ihrerseits in einer vom Durchbruch 10 ausgehenden, im Auftreffwinkelbereich 41 mündenden Führung 13 geführt ist. Der Schieber 11 ragt seitlich des Werkzeuges ein Stück weit aus dem Durchbruch 10 heraus und ist mit einem Rahmen 14 verbunden, an welchem eine nicht dargestellte Antriebsvorrichtung zur Bewegung des Schiebers 11 angreift. Der in Fig. 1 in vorgeschobener Stellung gezeigte Schieber 11 mit der ebenfalls in vorgeschobener Stellung dargestellten Zunge 12 besitzt als Rückstellelemente Federn 15, die diesen in die Ausgangsstellung zurückstellen. In der gezeigten Position dringt die Zunge 12 im Auftreffwinkelbereich 41 zwischen die Extrusionsströme 42, 42' so weit ein, daß sie eine einem Versteifungskörper 18 in etwa entsprechende Raumeinheit verdrängt. Unmittelbsr danach werden der Schieber 11 und die Zunge 12 zurückgezogen und hinterlassen dabei einen schlitzförmigen Hohlraum 17 im Band 16. Der Arbeitshub der Zunge 12 ist mit A bezeichnet. Dabei ist es wesentlich, daß der Arbeitshubweg mindestens um die Breite des jeweils erzeugten Hohlraumes vollständig außerhalb des Mundstücks 6 liegt. Denn nur hierdurch wird mit Sicherheit erreicht, daß der durch die Zunge gebildete Hohlraum auch in seiner vollen Breite erhalten bleibt. Im Bereich dieses Arbeitshubes A mündet von einer Seite her, und zwar von derjenigen, an welcher die Hohlräume 17 nach einer Seite hin offen bleiben, eine Injektionsdüse 19. Durch diese wird vorzugsweise bereits während des Vorschubes der Zunge 12 Luft oder Luft/Wasser-Gemisch oder Luft mit einem Anti-Klebemittel in den entstehenden Hohlraum 17 eingeführt und dadurch verhindert, daß dieser beim weiteren Vorschub des Bandes 16 im Schlitzkanal 5 zusammenklebt. Sobald nämlich das offene Ende des entstehenden Hohlraumes 17 in den Bereich der Injektionsdüse 19 gelangt, wird deren Öffnung vom Extrusionsmedium freigegeben und ein Trennmedium tritt unter Druck in den Hohlraum 17 ein. Dieses bewirkt eine Aufblähung des Hohlraumes, kühlt dessen Innenwände, läßt sie erstarren und überzieht sie gegebenenfalls mit einem Anti-Klebemittel. Als solches kommt beispielsweise Wassersprühnebel oder Luft mit einem Puder infrage, wie Talcum, Stearat, Kreide o.ä. Außerhalb des Extrudermundstücks 6 erreicht das Band 16 nach Beendigung seiner Formgebung als vorgefertigtes Fugendichtungsband mit vorgefertigten Hohlräumen 17 die Einschub-Station 21. Diese umfaßt ein die Versteifungskörper 18 enthaltendes Magazin 22 sowie einen mechanisch betätigbaren Schieber 23. Die Funktion dieser Einschub-Station 21 besteht darin, die Versteifungskörper 18 in die vorbereiteten Hohlräume 17 einzuschieben, und zwar so weit, daß deren Enden gleich weit von den Kanten 46, 46' entfernt im Inneren des Bandes 16 liegen. Um eine genaue Positionierung zu gewährleisten, verfügt die Einschub-Station 21 über eine Führung 38. In Extrusionsrichtung 20 folgend ist die Schweiß-Station 26 angeordnet. Diese hat die Funktion, die nach dem Einschieben der Versteifungskörper 18 noch an einer Seite offenen Enden der Hohlräume 17 hermetisch durch Schweißung zu verschließen. Die Schweiß-Station 26 umfaßt zu diesem Zweck einen Heißlufterzeuger 27 und eine Schweißdüse 28.

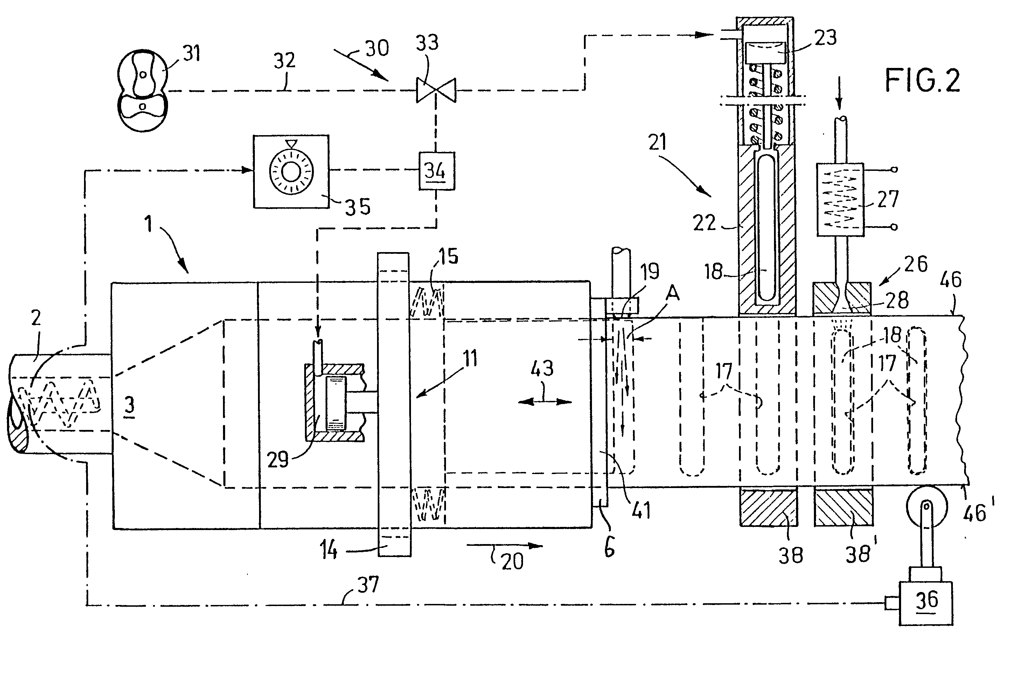

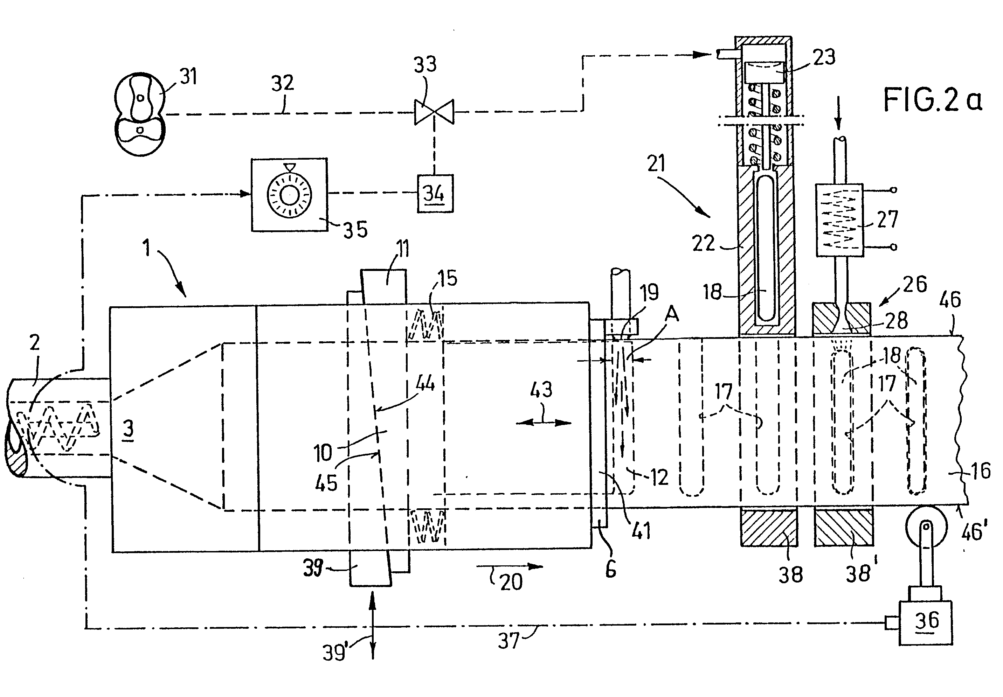

Fig. 2 zeigt die Vorrichtung in Draufsicht. Gleiche Funktionselemente sind mit gleichen Bezugsziffern bezeichnet. Die Draufsicht zeigt in übersichtlicher Weise die Anordnung und Funktionssequenz der einzelnen Vorrichtungsteile sowie Stationen in Extrusionsrichtung 20 von der im Auftreffwinkelbereich 41 mit dem Arbeitshub A eindringenden Zunge 12 sowie der Injektionsdüse 19 und über die Einschub-Station 21 bis schließlich zur Schweiß-Station 26. Im gezeigten Ausführungsbeispiel ist der Rahmen 14 des Schiebers 11 mit einer mechanischen Antriebsvorrichtung 29 in Verbindung. Diese kann, wie beispielsweise gezeigt, als pneumatisch oder hydraulisch betätigte Kolben/ Zylinder-Einheit ausgebildet sein. Es ist jedoch jede andere Art von kinematischer Antriebseinrichtung denkbar, wie z. B. Nockenantrieb, Kurvenscheibenantrieb, Exzenterantrieb u.ä. Die Einschub-Station 21 umfaßt das Magazin 22 mit den Versteifungskörpern 18 sowie einen ebenfalls mechanisch, elektrisch oder auf andere Art angetriebenen Schieber 23 in Verbindung mit einer Steuereinrichtung 30. Diese umfaßt eine Druckluftquelle 31, eine Druckluftleitung 32, ein Steuerventil 33, einen Regler 34, einen Timer 35, einen Tachogenerator 36 sowie eine Steuerleitung 37. Die Schweiß-Station 26 umfaßt den Heißlufterzeuger 27 und die Schweißdüse 28 sowie eine Führung 38', während die Einschub-Station 21 mit einer Führung 38 ausgestattet ist.

Fig. 2a zeigt die gleiche Vorrichtung, jedoch mit einem alternativen Antrieb des Schiebers 11. Dieser wirkt mit einem Bewegungskeil 39 zusammen, dessen Arbeitshub, dargestellt durch den Doppelpfeil 39', eine Bewegung des Schiebers 11 in Richtung des Doppelpfeiles 43 bewirkt. Der Antrieb des Bewegungskeiles 39 kann beispielsweise aus einem nicht dargestellten Hubmagneten bestehen.

Um ein taktweises Arbeiten sowohl des Antriebes 29 für den Schieber 11 oder des Bewegungskeiles 39 sowie des Schiebers 23 der Einschub-Station 21 zu ermöglichen, ist beispielsweise eine Energiequelle in Form einer Druckluftquelle 31 mit einer Druckluftleitung 32 und einem Steuerventil 33 vorgesehen, welches durch einen Regler 34 in zeitlichen Intervallen vom Timer 35 gesteuert wird. Diese Steuerung kann beispielsweise mit einem Tachogenerator 36 ausgestattet sein, der die Vorschubgeschwindigkeit des Bandes 16 abgreift und ein geschwindigkeitsproportionales Signal über die Steuerleitung 37 dem Timer 35 aufschaltet.

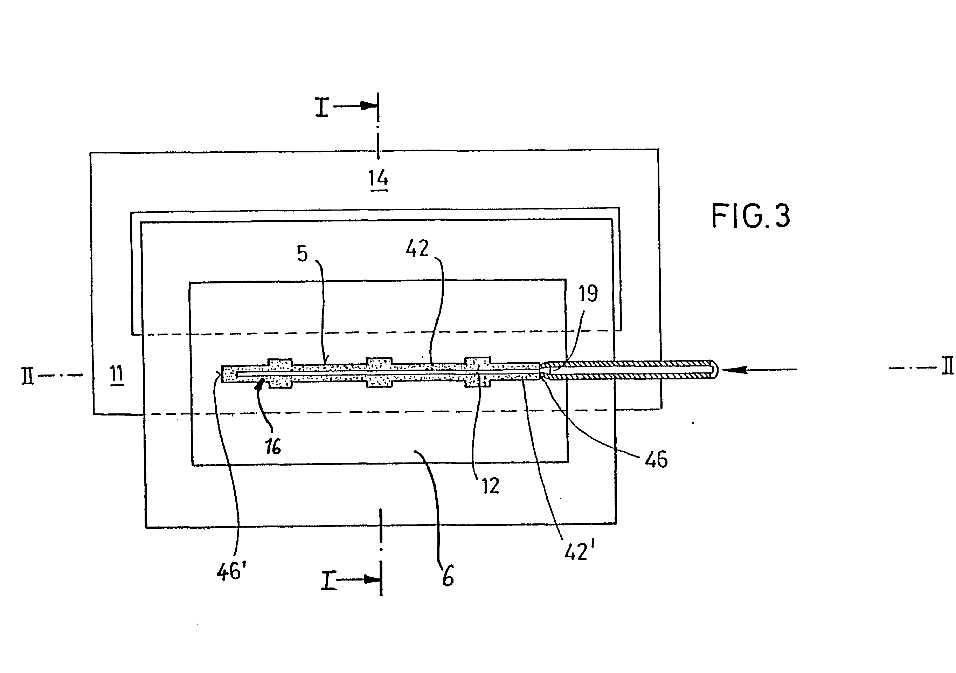

Fig. 3 zeigt die gleiche Vorrichtung im Schnitt gemäß Schnittebenen III - III in Fig. 1. Die Darstellung läßt die Lage der Zunge 12 im Auftreffwinkelbereich 41 erkennen, sowie die dort einmündende Injektionsdüse 19. Darüber hinaus geht aus dieser die Anordnung des Schiebers 11 sowie des mit dem Schieber verbundenen Rahmens 14 hervor.

Die Funktion der Vorrichtung dürfte aus den Fig. 1 bis 3 und den zugehörigen Erläuterungen unschwer erkennbar sein. Der vom Extruder 2 erzeugte Extrusionsstrom, der in zwei Teilströmen 4 und 4' den Verdrängerkörper 9 umfließt, vereinigt sich mit den Teilströmen 42 und 42' im Auftreffwinkelbereich 41 unter Formgebung zum Band 16. In Zeitintervallen fährt der Schieber 11 vor und mit ihm die Zunge 12, die dabei im Auftreffwinkelbereich 41 zwischen die Extrusions-Teilströme 42, 42' eindringt und eine Raumeinheit verdrängt. Unmittelbar danach wird die Zunge 12 zurückgezogen und hinterläßt im entstehenden Band 16 einen Hohlraum 17, welcher durch Einblasen von Luft oder Luftwassergemisch mit Hilfe der Injektionsdüse 19 am Zusammenfallen gehindert wird. Beim Vorbeiwandern eines Hohlraumes 17 an der Einschub-Station 21 wird, ausgelöst von der Steuereinrichtung 30, der Schieber 23 betätigt und schiebt aus dem Magazin 22 einen Versteifungskörper von der Seite her in den seitlich offenen Hohlraum 17. Beim weiteren Vorschub des Bandes 16 passiert dieses die Schweiß-Station 26, welche die Kantenpartie des Bandes durch Heißluft verschweißt, wobei die seitlichen Öffnungen der Hohlräume 17 geschlossen werden.

Die in den Zeichnungen und der zugehörigen Beschreibung erläuterte Vorrichtung ist lediglich als Ausführungsbeispiel aufzufassen, welches nach fachlichem Ermessen vom Hersteller eines entsprechenden Werkzeuges im Rahmen handwerklichen Könnens unterschiedlich ausgestaltet werden kann. Erfindungswesentlich ist hingegen die Art der Herstellung des Fugenbandes sowie die Taktfolge der entsprechenden Arbeitsgänge.

**Patentansprüche**

1. Verfahren zur Herstellung eines Fugendichtungsbandes aus Kunststoff mit in Abständen quer zur Bandlänge angeordneten, vom Bandprofil umschlossenen Versteifungskörpern, bei dem in einem formgebenden Werkzeug eines Extruders Extrusionsströme jeweils unter einem spitzen Winkel zur Extrusionsebene in einem Auftreffwinkelbereich zusammengeführt und anschließend zum Band vereinigt werden, und bei dem die Versteifungskörper in der Extrusionsebene in das Band eingebettet werden, dadurch gekennzeichnet, daß die Extrusionsströme unter Formgebung zum Band vereinigt werden, daß von innerhalb des formgebenden Werkzeugs her eine Zunge in Extrusionsrichtung durch den Auftreffwinkelbereich so weit zwischen die Extrusionsströme taktweise eingeschoben wird, daß sie unter Verdrängung einer einem Versteifungskörper in etwa entsprechenden Raumeinheit zwischen die Extrusionsströme bis außerhalb des Auftreffwinkelbereichs eindringt und danach unter Freigabe eines nach einer Seite hin offenen, schlitzförmigen Hohlraumes von dem Auftreffwinkelbereich zurückgezogen wird, und daß die Versteifungskörper in die so gebildeten Hohlräume eingeschoben werden.

2. Verfahren nach Anspruch 1, dadurch gekennzeichnet, daß die Hohlräume mit der Form einseitig offener schmaler Taschen gebildet werden, deren Länge geringfügig kürzer als die Breite des Bandes ist.

3. Verfahren nach einem der Ansprüche 1 oder 2, dadurch gekennzeichnet, daß in die Hohlräume während und/oder unmittelbar nach ihrer Herstellung ein Trenn- und/oder Kühlmedium unter Druck eingeführt wird.

4. Verfahren nach einem der Ansprüche 1 bis 3, dadurch gekennzeichnet, daß als Trenn- und/oder Kühlmedium Luft oder Luft/ Wasser- Gemisch oder Luft mit Anteilen eines pulverförmigen Anti-Klebemittels verwendet wird.

5. Verfahren nach einem der Ansprüche 1 bis 4, dadurch gekennzeichnet, daß die Versteifungskörper in das Band nach dessen Austritt aus dem formgebenden Werkzeug in die einseitig offenen Schlitze von der Seite her eingeschoben werden und anschließend die Schlitzöffnungen verschweißt werden.

6. Verfahren nach Anspruch 5, dadurch gekennzeichnet, daß als Versteifungskörper Metallstäbe mit rundem, elliptischem oder ellipsoidischem Profil verwendet werden, die auf fertige Längen geschnitten und mit vorzugsweise verrundeten Stirnkanten ausgebildet sind, deren Breite zwischen 5 und 8 mm, vorzugsweise ca. 6 mm, deren Dicke zwischen 1,5 und 3 mm, vorzugsweise ca. 2 mm beträgt, und deren Länge einige mm kürzer als die Breite des Bandes ist.

7. Vorrichtung zur Herstellung eines Fugendichtbandes (16) aus extrudiertem Kunststoff, insbesondere nach dem Verfahren der Ansprüche 1 bis 6, umfassend einen Extruder (2) mit einem formgebenden Werkzeug, welches mit zwei, einen Verdrängerkörper (9, 9', 9'') zwischen sich einschließenden Hälften (8, 8') Strömungskanäle (4, 4') oberhalb und unterhalb des Verdrängerkörpers (9) bildet, die spitzwinklig zur Längsteilungsebene zusammenlaufen, dadurch gekennzeichnet, daß die Strömungskanäle (4, 4') innerhalb des formgebenden Werkzeugs in einem Auftreffwinkelbereich (41) zusammenlaufen und einen das Profil des Bandes bestimmenden Schlitzkanal (5) bilden, daß der Verdrängerkörper (9, 9', 9'') eine im Auftreffwinkelbereich (41) mündende Führung (13) aufweist, welche eine in Extrusionsrichtung (20) durch den Auftreffwinkelbereich (41) verschiebbare, an einem Schieber (11) befestigte Zunge (12) aufnimmt und daß der Schieber (11) mit einem taktweise Arbeitshübe (43, A) ausführenden Antrieb (29, 39) verbunden ist.

8. Vorrichtung nach Anspruch 7, dadurch gekennzeichnet, daß die Zunge (12) einen derartigen Arbeitshub (A) aufweist, daß ihr vorderes Ende in ihrer in Extrusionsrichtung (20) vorgeschobenen Stellung etwa um die Breite des zu erzeugenden Hohlraums außerhalb des Mundstücks (6) im Anschluß an den Auftreffwinkelbereich (41) liegt.

9. Vorrichtung nach Anspruch 7 oder 8, dadurch gekennzeichnet, daß das vordere Ende der Zunge (12) in deren entgegen der Extrusionsrichtung (20) zurückgezogener Ruhelage innerhalb des formgebenden Werkzeugs etwas vor der Öffnung des Mundstücks (6) liegt.

10. Vorrichtung nach einem der Ansprüche 7 bis 9, dadurch gekennzeichnet, daß die Zunge (12) quer zur Extrusionsrichtung (20) geringfügig schmaler als der Schlitzkanal (5) ist und an einer Seite mit diesem kantengleich verläuft.

11. Vorrichtung nach einem der Ansprüche 7 bis 10, dadurch gekennzeichnet, daß in Extrusionsrichtung (20) außerhalb des formgebenden, als Extruderkopf (1) ausgebildeten Werkzeugs zunächst von der Seite her eine Düse (19) für die Zuführung von Trennmedium mündet und dann eine Einschubstation (21) mit Magazin (22) und Schieber (23) zum Einführen der Versteifungskörper (18), sowie in Extrusionsrichtung (20) folgend eine Schweißstation (26) angeordnet ist.

12. Vorrichtung nach Anspruch 11, dadurch gekennzeichnet, daß im Bereich der Einschub- (21) und Schweißstation (26) wenigstens eine Führung (38, 38') für das extrudierte Band (16) angeordnet ist.

13. Vorrichtung nach einem der Ansprüche 7 bis 12, dadurch gekennzeichnet, daß der Verdrängerkörper (9) in der Extrusionsebene (II - II) in zwei Hälften (9', 9'') geteilt ist und in dieser Ebene einen quer zur Extrusionsrichtung (20) verlaufenden Durchbruch (10) zur Aufnahme des Schiebers (11) aufweist, woran sich in Extrusionsrichtung (20) die Führung (13) anschließt.

14. Vorrichtung nach einem der Ansprüche 7 bis 13, dadurch gekennzeichnet, daß der Schieber (11) mit einem den Extruderkopf (1) umgreifenden Rahmen (14) verbunden ist, an welchem ein taktweise arbeitender mechanischer, hydraulischer, pneumatischer oder elektromagnetischer Antrieb (29) angreift und zur Bewegung der Zunge (12) mit diesem zusammenwirkt.

15. Vorrichtung nach einem der Ansprüche 7 bis 14, dadurch gekennzeichnet, daß der Schieber (11) von Rückstellfedern (15) entgegen der Extrusionsrichtung (20) in Ruhelage gehalten wird, und dabei an seiner Rückseite mit einer abgeschrägten Fläche (44) an der Gegenfläche (45) eines im Durchbruch (10) geführten Bewegungskeils (39) anliegt, der bei Verschiebung (39') eine Bewegung (43) des Schiebers (11) in Extrusionsrichtung (20) und umgekehrt verursacht, und daß als Antrieb für den Keil (39) gegebenenfalls ein Hubmagnet vorgesehen ist.

16. Vorrichtung nach einem der Ansprüche 7 bis 15, dadurch gekennzeichnet, daß zur Steuerung der Arbeitstakte eine Reglereinheit (34, 35) vorgesehen ist, die vorzugsweise im Zusammenwirken mit einem Tachogenerator (36) die Zeitintervalle der Arbeitstakte nach der Extrusionsgeschwindigkeit einstellt.

17. Fugendichtungsband (16) aus extrudiertem Kunststoff, welches nach dem Verfahren der Ansprüche 1 bis 6 hergestellt ist, dadurch gekennzeichnet, daß das Band (16) bei in seiner Längserstreckung unverändertem Profil quer dazu verlaufende schlitzförmige Hohlräume (17) im Bereich der Extrusionsebene (II - II) aufweist, in welche Versteifungskörper (18) von elliptischem oder ellipsoidischem Profil eingelegt sind, und welche an der Bandkante (46) durch Schweißung hermetisch verschlossen sind.

## Claims

1. Method for producing a plastic joint sealing strip with strengthening parts arranged at intervals transversely to the length of the strip, surrounded by the profiled strip, in which, in a shaping tool of an extruder, extrusion flows are guided together each at an acute angle with respect to the extrusion plane in an angular region of incidence and then combined to form the strip and in which the strengthening parts are embedded in the strip in the extrusion plane, characterised in that the extrusion flows are combined with shaping to form the strip, that from inside the shaping tool, a tongue is introduced cyclically in the extrusion direction through the angular region of incidence so far between the extrusion flows that with the displacement of a unit volume corresponding approximately to a strengthening part, it penetrates between the extrusion flows to outside-the angular region of incidence and then with the clearance of a slot-like cavity open towards one side, is withdrawn from the angular region of incidence and that the strengthening parts are inserted in the cavities formed in this way.

2. Method according to Claim 1, characterised in that the cavities are formed as narrow pockets open on one side, the length of which is slightly shorter than the width of the strip.

3. Method according to one of Claims 1 or 2, characterised in that a separating and/or cooling medium is introduced under pressure into the cavities during and/or directly after they are formed.

4. Method according to one of claims 1 to 3, characterised in that air or an air/water mixture or air with portions of a pulverulent anti-adhesive is used as the separating and/or cooling medium.

5. Method according to one of Claims 1 to 4, characterised in that the strengthening parts are introduced into the strip from the side into slots which are open on one side, after it leaves the shaping tool and then the slot openings are welded.

6. Method according to Claim 5, characterised in that metal rods with a round, elliptical or ellipsoidal profile are used as the strengthening parts, which rods are cut to finished lengths and are formed preferably with rounded front edges, the width of which amounts to between 5 and 8 mm, preferably approxmately 6 mm and the thickness of which amounts to between 1.5 and 3 mm, preferably approximately 2 mm and the length of which is a few mm shorter than the width of the strip.

7. Apparatus for producing a joint sealing strip (16) from extruded plastics material, in particular according to the method of Claims 1 to 6, comprising an extruder (2) with a shaping tool, which with two halves (8, 8') enclosing a displacement-type member (9, 9', 9'') therebetween forms flow channels (4, 4') above and below the displacement-type member (9), which converge at an acute angle to the longitudinal plane of division, characterised in that within the shaping tool the flow channels (4, 4') converge in an angular region of incidence (41) and form a slot channel (5) determining the profile of the strip, that the displacement-type member (9, 9', 9'') comprises a guide (13) opening out in the angular region of incidence (41), which guide receives a tongue (12) attached to a slide (11) and able to move in the extrusion direction (20) through the angular region of incidence (41) and that the slide (11) is connected to a drive (29, 39) carrying out a cyclic working stroke (43, A).

8. Apparatus according to Claim 7, characterised in that the tongue (12) has such a working stroke (A), that in its advanced position in the extrusion direction (20), its front end lies approximately by the width of the cavity to be produced outside the mouthpiece (6) adjoining the angular region of incidence (41).

9. Apparatus according to Claim 7 or 8, characterised in that in its retracted inoperative position in opposition to the extrusion direction (20), the front end of the tongue (12) lies within the shaping tool approximately in front of the opening of the mouthpiece (6).

10. Apparatus according to one of Claims 7 to 9, characterised in that transverse to the extrusion direction (20), the tongue (12) is slightly narrower than the slot channel (5) and extends flush with the latter on one side.

11. Apparatus according to one of Claims 7 to 10, characterised in that in the extrusion direction (20) outside the shaping tool constructed as an extruder head (1), first of all a nozzle (19) for the supply of separating medium opens out from the side and then an insertion station (21) with a magazine (22) and slide (23) is provided for introducing the strengthening parts (18) and following this in the extrusion direction (20) is a welding station (26).

12. Apparatus according to Claim 11, characterised in that located in the region of the insertion station (21) and welding station (26) is at least one guide (38, 38') for the extruded strip (16).

13. Apparatus according to one of Claims 7 to 12, characterised in that the displacement-type member (9) is divided into two halves (9', 9'') in the extrusion plane (II - II) and in this plane comprises an opening (10) extending transversely to the extrusion direction (20) for receiving the slide (11), adjoining which in the extrusion direction (20) is the guide (13).

14. Apparatus according to one of Claims 7 to 13, characterised in that the slide (11) is connected to a frame (14) surrounding the extruder head (1), acting on which frame is a cyclically operating, mechanical, hydraulic, pneumatic or electromagnetic drive (29) and co-operating with the latter for moving the tongue (12).

15. Apparatus according to one of Claims 7 to 14, characterised in that the slide (11) is held in the inoperative position in opposition to the extrusion direction (20) by restoring springs (15) and in this case bears at its rear side by a bevelled surface (44) against the counter-surface (45) of a movement wedge (39) guided in the opening (10), which at the time of the displacement (39') causes a movement (43) of the slide (11) in the extrusion direction (20) and vice versa and that a lifting magnet is possibly provided as the drive for the wedge (39).

16. Apparatus according to one of Claims 7 to 15, characterised in that provided for controlling the working cycles is a control unit (34, 35), which preferably co-operating with a tachogenerator (36) adjusts the time intervals of the working cycles according to the extrusion speed.

17. Joint sealing strip (16) of extruded plastics material, which is produced according to the method of Claims 1 to 6, characterised in that in its profile which is unchanged over its longitudinal extent, the strip (16) comprises slot-like cavities (17) extending transversely thereto, in the region of the extrusion plane (II - II), in which strengthening parts (18) of elliptical or ellipsoidal profile are inserted and which are sealed hermetically by welding on the strip edge (46).

**Revendications**

1. Procédé de réalisation d'un profilé d'étanchéité pour joints en matière synthétique muni d'éléments de renforcement agencés à intervalles perpendiculairement à la longueur du profilé et entourés par celui-ci, dans lequel, dans l'outil de façonnage d'une extrudeuse, des flux de matière extrudée sont respectivement réunis, sous un angle aigu par rapport au plan d'extrusion, dans une région angulaire de rencontre et ensuite rassemblés dans une bande, et dans lequel les éléments de renforcement sont insérés dans la bande dans le plan d'extrusion, caractérisé en ce que les courants d'extrusion sont réunis en bande tout en exerçant un façonnage, qu'à partir de l'intérieur de l'outil de façonnage, une languette est glissée cycliquement dans la direction d'extrusion à travers la région angulaire de rencontre entre les courants d'extrusion jusqu'à pénétrer, en déplaçant un volume correspondant sensiblement à un élément de renforcement, entre les flux de matière extrudée et arriver à l'extérieur de la région angulaire de rencontre et est ensuite retirée de la région angulaire de rencontre en libérant un creux ayant la forme d'une fente ouverte d'un côté et que les éléments de renforcement sont ensuite introduits dans les creux ainsi formés.

2. Procédé selon la revendicaton 1, caractérisé en ce que les creux ont la forme de poches étroites ouvertes d'un côté dont la longueur est légèrement inférieure à la largeur du profilé.

3. Procédé selon l'une des revendications 1 ou 2, caractérisé par le fait qu'un agent de séparation et/ou de refroidissement est introduit sous pression au cours de et/ou immédiatement après leur réalisation.

4. Procédé selon l'une des revendications 1 à 3, caractérisé en ce que l'on utilise en tant qu'agent de séparation et/ou de refroidissement de l'air ou un mélange air/eau ou de l'air contenant un agent anti-adhésif en forme de poudre.

5. Procédé selon l'une des revendications 1 à 4, caractérisé en ce que les éléments de renforcement sont introduits latéralement dans le profilé, après sa sortie de l'outil de façonnage, par les fentes ouvertes d'un côté et que les ouvertures des fentes sont ensuité fermées par soudure.

6. Procédé selon la revendication 5, caractérisé par le fait qu'on utilise en tant qu'éléments de renforcement des tiges métalliques de section circulaire elliptique ou ellipsoïdal qui sont prédécoupées à une certaine longueur et munies de bords d'attaque arrondis, dont la largeur est comprise entre 5 et 8 mm et est de préférence d'environ 6 mm, dont l'épaisseur est comprise entre 1,5 et 3 mm et est de préférence d'environ 2 mm et dont la longueur est inférieure de quelques mm à la largeur de la bande.

7. Dispositif pour la réalisation d'un profilé d'étanchéité pour joints (16) en matière synthétique extrudée, en particulier selon le procédé des revendications 1 à 6, comprenant une extrudeuse (2) munie d'un outil de façonnage qui, par deux moitiés (8, 8') enfermant un corps de déplacement (9, 9', 9'') entre elles, constitue des canaux de circulation (4, 4') au-dessus et en-dessous du corps de déplacement (9), ces canaux convergeant à angle aigu par rapport au plan de séparation longitudinale, caractérisé en ce que les canaux de circulation (4, 4') à l'intérieur de l'outil de façonnage convergent dans une région angulaire de rencontre (41) et forment un canal (5) ayant la forme d'une fente que détermine le profil de la bande, que le corps de déplacement (9, 9', 9'') présente un dispositif de guidage (13) débouchant dans la région angulaire de rencontre (41) qui accueille une languette (12) déplaçable dans la direction d'extrusion (20) à travers la région angulaire de rencontre (41) et fixée sur un coulisseau (11), et que le coulisseau (11) est relié à un dispositif d'entraînement (29, 39) exécutant cycliquement des courses de travail (43, A).

8. Dispositif selon la revendication 7, caractérisé en ce que la languette (12) présente une course de travail (A) telle que son extrémité antérieure, dans sa position avancée dans la direction d'extrusion (20), soit située à l'extérieur de l'orifice (6), dans le prolongement de la région angulaire de rencontre (41), sur une longueur correspondant à la largeur du creux à réaliser.

9. Dispositif selon la revendication 7 ou 8, caractérisé en ce que l'extrémité antérieure de la languette (12) dans sa position de repos rétractée à l'inverse de la direction d'extrusion (20), est située à l'intérieur de l'outil de façonnage, à faible distance de l'ouverture de l'élément (6).

10. Dispositif selon l'une des revendications 7 à 9, caractérisé en ce que la languette (12) est légèrement plus étroite dans la direction perpendiculaire à la direction d'extrusion (20) que le canal en forme de fente (5) et que, d'un côté, les bords de ces deux parties s'étendent dans la même direction.

11. Dispositif selon l'une des revendications 7 à 10, caractérisé par le fait que, dans la direction d'extrusion (20), à l'extérieur de l'outil de façonnage réalisé sous la forme d'une tête d'extrusion (1), débouche d'abord latéralement une buse (19) d'amenée de l'agent de séparation et qu'ensuite un poste d'introduction (21) comprenant un chargeur (22) et un coulisseau (23) pour insérer les éléments de renforcement (18) et puis dans la direction d'extrusion (20), un poste de soudage (26) sont disposés.

12. Dispositif selon la revendication 11, caractérisé par le fait que dans la région du poste d'insertion (21) et de soudage (26) est prévu au moins un dispositif de guidage (38, 38') de la bande extrudée (16).

13. Dispositif selon l'une des revendications 7 à 12, caractérisé en ce que le corps de déplacement (9) est partagé, dans le plan d'extrusion (II - II), en deux moitiés (9', 9'') et présente dans ce plan un passage (10) s'étendant perpendiculairement à la direction d'extrusion (20), destinée à accueillir le coulisseau (11), suivi, dans la direction d'extrusion (20), du dispositif de guidage (13).

14. Dispositif selon l'une des revendications 7 à 13, caractérisé en ce que le coulisseau (11) est relié à un cadre (14) entourant la tête d'extrusion (1), ce cadre étant attaqué par un entraînement (29) cyclique, mécanique, hydraulique, pneumatique ou électromagnétique et coopérant avec le cadre pour le déplacement de la languette (12).

15. Dispositif selon l'une des revendications 7 à 14, caractérisé en ce que le coulisseau (11) est maintenu dans sa position de repos par des ressorts de rappel (15) à l'inverse de la direction d'extrusion (20) et qu'une région biseautée (44) de sa face arrière est appliquée sur la face correspondante (45) d'un coin mobile (39) guidé dans le passage (10) qui, lors de son déplacement (39') provoque un mouvement (43) du coulisseau (11) dans la direction d'extrusion (20) et inversément et qu'un aimant de levage est éventuellement prévu en tant qu'entraînement du coin (39).

16. Dispositif selon l'une des revendications 7 à 15, caractérisé en ce que, pour la commande du cycle, il est prévu une unité de réglage (34, 35) qui détermine les intervalles de temps du cycle selon la vitesse d'extrusion, de préférence en coopération avec un générateur tachymétrique (36).

17. Profilé d'étanchéité pour joints (16) en matière synthétique extrudée, réalisé selon le procédé des revendications 1 à 6, caractérisé en ce que la bande (16), tout en conservant un profile longitudinal inchangé, présente, dans la région du plan d'extrusion (II - II), des creux (17) en forme de fentes s'étendant perpendiculairement à la direction longitudinale, dans lesquels des éléments de renforcement (18) ayant un profil elliptique ou ellipsoïdal sont insérés dont les bords (46) côté profilé sont fermés hermétiquement.

FIG.1

FIG.2

FIG.2 a

EP 0 126 277 B1

FIG.3

EP 0 126 277 B1